# EUROPÄISCHE PATENTSCHRIFT

(11) **EP 2 935 859 B1**
(45) Veröffentlichungstag und Bekanntmachung des Hinweises auf die Patenterteilung: **21.12.2016**
(21) Anmeldenummer: 13785376.8
(22) Anmeldetag: 17.10.2013
(51) Int. Cl.: F02M 59/44

(54) **KOLBEN-KRAFTSTOFFPUMPE FÜR EINE BRENNKRAFTMASCHINE**
PISTON FUEL PUMP FOR AN INTERNAL COMBUSTION ENGINE
POMPE À CARBURANT ALTERNATIVE POUR MOTEUR À COMBUSTION INTERNE

(30) Priorität: 20.12.2012 DE 102012224029
(43) Veröffentlichungstag der Anmeldung: 28.10.2015
(73) Patentinhaber: Robert Bosch GmbH, 70442 Stuttgart (DE)
(72) Erfinder: FLO, Siamend, 71701 Schwieberdingen (DE); HILLIGARDT, Markus, 70825 Korntal-Muenchingen (DE); JAHN, Heiko, 71732 Tamm (DE); ELISCHER, Franz, 74357 Boennigheim (DE); GIESSLER, Cornelia, 71717 Beilstein (DE); Koch, Bernd, 71696 Moeglingen (DE)
(86) Internationale Anmeldenummer: PCT/EP2013/071737
(87) Internationale Veröffentlichungsnummer: WO 2014/095120

(56) Entgegenhaltungen:
- EP-A1- 1 284 367
- EP-A2- 0 156 136
- GB-A- 1 274 999
- GB-A- 2 332 035
- US-A1- 2008 224 417

## Beschreibung

### Stand der Technik

Die Erfindung betrifft eine Kolben-Kraftstoffpumpe nach dem Oberbegriff des Anspruchs 1.

Vom Markt bekannt sind Kraftstoffsysteme von Brennkraftmaschinen, bei denen der Kraftstoff aus einem Kraftstofftank mittels einer mechanisch angetriebenen Kolben-Kraftstoffpumpe unter hohem Druck in ein Kraftstoffrail gefördert wird. Hierzu ist in der Kolben-Kraftstoffpumpe ein verschiebbar gelagerter Pumpenkolben vorgesehen, der Kraftstoff in einem Förderraum der Kolben-Kraftstoffpumpe verdichtet. Der Pumpenkolben ist in einer Kolbenbuchse durch eine enge Passung gleitend und mit einem geringen Dichtspalt geführt. Die Kolbenbuchse muss zum Abstützen und Abdichten über eine Spaltdichtung eine gewisse Länge aufweisen und gegebenfalls große Querkräfte aufnehmen. Dauer wird die Kolbenbuchse oft aus Stahl hergestellt. Aufgrund hoher Toleranzanforderungen wird darüber hinaus eine sogenannte "Kolbenpaarung" verwendet, d.h. jedem Pumpengehäuse wird ein bestimmter Kolben zugeordnet. Ferner muss der Zylinder im Pumpengehäuse aufwendig gehont werden.

EP 0 156 136 A2 offenbart eine Hochdruckdichtung für einen Kolben, insbesondere einen Plungerkolben.

### Offenbarung der Erfindung

Das der vorliegenden Erfindung zu Grunde liegende Problem wird durch eine Kraftstoff-Kolbenpumpe mit den Merkmalen des Anspruchs 1 gelöst. Vorteilhafte Weiterbildungen der Erfindung sind in Unteransprüchen genannt. Weitere für die Erfindung wichtige Merkmale finden sich darüber hinaus in der nachfolgenden Beschreibung und in der Zeichung.

Die erfindungsgemäße Kolben-Kraftstoffpumpe hat den Vorteil, dass eine Kolbenbuchse und die entsprechende hochgenaue Passung des Kolbens in der Kolbenbuchse nicht mehr zwingend erforderlich ist und somit erhebliche Kosten eingespart werden können. Statt dessen werden Lagerung und Abdichtung funktional getrennt in einen Lagerungsbereich und einen Abdichtbereich. Dessen Dichtlippe ermöglicht eine reibungsarme, spaltfreie und somit hochgenaue Abdichtung. Dadurch, dass die Dichtlippe elastisch ausgebildet ist und zumindest abschnittsweise unter Vorspannung an einer Pumpenzylinderwand anliegt, wird eine Vorspannung erzeugt. Durch die Vorspannung kann auch in einem Saughub der Kolben-Kraftstoffpumpe, d.h. wenn der Pumpenkolben sich zum unteren Totpunkt bewegt, eine Dichtfunktion im Abdichtbereich gewährleistet werden. Im Verdichtungshub, d.h. wenn der Pumpenkolben sich zum oberen Totpunkt bewegt, kann dann die Dichtlippe - wenn sie zum Förderraum hin gerichtet ist - vom im Förderraum herrschenden Kraftstoffdruck druckunterstützt dichtend an die Pumpenzylinderwand gedrückt werden.

Eine Ausgestaltung der Kolben-Kraftstoffpumpe sieht vor, dass die Kolben-Kraftstoffpumpe ein Kunststoffelement umfasst, an dem die Lagerungs- und Dichtanordnung ausgebildet ist. Durch das Vorsehen des Kunststoffelements entfallen die hohen Toleranzanforderungen und es kann auf einen zusätzlichen Honprozess in der Montagelinie der Kolben-Kraftstoffpumpe verzichtet werden. Darüber hinaus kann das Kunststoffelement als einfaches Spritzgussteil hergestellt sein, wodurch es besonders kostengünstig herstellbar ist. Auch die Gefahr eine "Kolbenfressers" durch Materialverschmelzung kann durch die Wahl des Kunststoffelements vermieden werden.

Vorgeschlagen wird auch, dass das Kunststoffelement aus Polyamid (PA) und/oder aus Polyetheretherketon (PEEK) hergestellt ist. Es hat sich gezeigt, dass bei der Herstellung des Kunststoffelements aus Polyamid (PA) oder Polyetheretherketon (PEEK) sehr gute Ergebnisse im Bezug auf die Führung bzw. Lagerung am Führungsbereich und im Bezug auf die Abdichtung am Abdichtbereich erzielbar sind.

Eine Ausgestaltung der Kolben-Kraftstoffpumpe sieht vor, dass die Lagerungs- und Dichtanordnung mit dem Pumpenkolben fest verbunden ist, vorzugsweise der Pumpenkolben einen kreisringartigen Absatz aufweist, mit dem die Lagerungs- und Dichtanordnung verklipst und/oder verklebt ist. Durch die Verbindung des Kunststoffelements mit dem Pumpenkolben kann das Kunststoffelement der Auf- und Abbewegung des Pumpenkolbens folgen, wobei bei einer Klipsverbindung die Verbindung vorzugsweise lösbar und revisionierbar ausgebildet ist. Folglich kann das Kunststoffelement bei Verschleiß ersetzt werden.

Dabei kann der Absatz in der Umgebung eines einem Förderraum der Pumpe zugewandten Endabschnitts des Pumpenkolbens angeordnet sein. Das Vorsehen des Absatzes in der Nähe des Endabschnitts ist von Vorteil, da der Führungsabschnitt somit nah an einem möglichen Lager- bzw. Kraftangriffspunkt angeordnet werden kann und auftretende Querkräfte am Endabschnitt des Pumpenkolbens vom Kunststoffelement aufgenommen werden können.

Ferner wird vorgeschlagen, dass die Lagerungs- und Dichtanordnung einteilig ausgebildet ist. Durch eine einteilige Herstellung des Kunststoffelements kann dieses in lediglich einem Fertigungsschritt beispielsweise durch einen Spritzgussprozess hergestellt werden.

Eine weitere Ausgestaltung der Kolben-Kraftstoffpumpe sieht vor, dass die Lagerungs- und Dichtanordnung mehrteilig ausgebildet ist. Dies ist vorteilhaft, da angepasst an die jeweiligen Anforderungen, d.h. für die Führung und/oder Lagerung und für die Dichtfunktion verschiedene Kunststoffe für den Führungsbereich und für den Abdichtbereich gewählt werden können.

Eine weitere Weiterbildung der erfindungsgemäßen Kolben-Kraftstoffpumpe zeichnet sich dadurch aus, dass die Teile der Lagerungs- und Dichtanordnung miteinander verklipst und/oder verklebt sind. Dies ist vorteilhaft, da unabhängig von der Materialwahl, d.h. vom Material des Führungsbereichs und des Abdichtbereichs die Teile miteinander verbunden werden können.

Denkbar ist ferner, dass zwischen Kunststoffelement und Pumpenzylinder im Bereich des Führungsbereiches ein Spalt im Bereich von etwa 1/100 mm bis etwa 10/100 mm, vorzugsweise von etwa 3/100 mm vorgesehen ist. Dies ist von Vorteil, da durch den Spalt ein Verklemmen des Pumpenkolbens im Pumpenzylinder vermieden werden kann.

Eine weitere Ausgestaltung der Kolben-Kraftstoffpumpe sieht vor, dass in der Umgebung eines einem Förderraum der Pumpe abgewandten Endabschnitts des Pumpenkolbens eine zweite Lagerungsanordnung, insbesondere ein zweites Kunststoffelement zur Lagerung des Pumpenkolbens vorzugsweise ortsfest relativ zum Pumpenzylinder angeordnet ist. Der Pumpenkolben ist folglich an zwei Lagerstellen geführt und/oder gelagert. Zum einen erfolgt eine Führung bzw. Lagerung durch den Führungsabschnitt des Kunststoffelements, zum anderen erfolgt eine Führung bzw. Lagerung durch das zweite Kunststoffelement. Die jeweiligen Führungs- bzw. Lagerpunkte liegen dabei in den jeweiligen Endabschnitten des Pumpenkolbens nahe an den Kraftangriffspunkten, an denen Querkräfte auftreten können, beispielsweise in der Umgebung des Nockenantriebs des Pumpenkolbens. Somit können die Belastungen auf die Führungs- bzw. Lagerpunkte reduziert werden.

Nachfolgend werden Beispiele der vorliegenden Erfindung unter Bezugnahme auf die beiliegenden Zeichnungen näher erläutert. In den Zeichnungen zeigen:
- Figur 1: eine schematische Darstellung eines Kraftstoffsystems einer Brennkraftmaschine mit einem Ausschnitt einer erfindungsgemäßen Kolben-Kraftstoffpumpe, die wiederum eine Lagerungs- und Dichtanordnung aufweist;
- Figur 2: eine vergrößerte Schnittdarstellung des Ausschnitts der Kolben-Kraftstoffpumpe gemäß Figur 1 zur Erläuterung der Lagerungs- und Dichtanordnung; und
- Figur 3: einen vergrößerten Ausschnitt der Schnittdarstellung gemäß Figur 2.

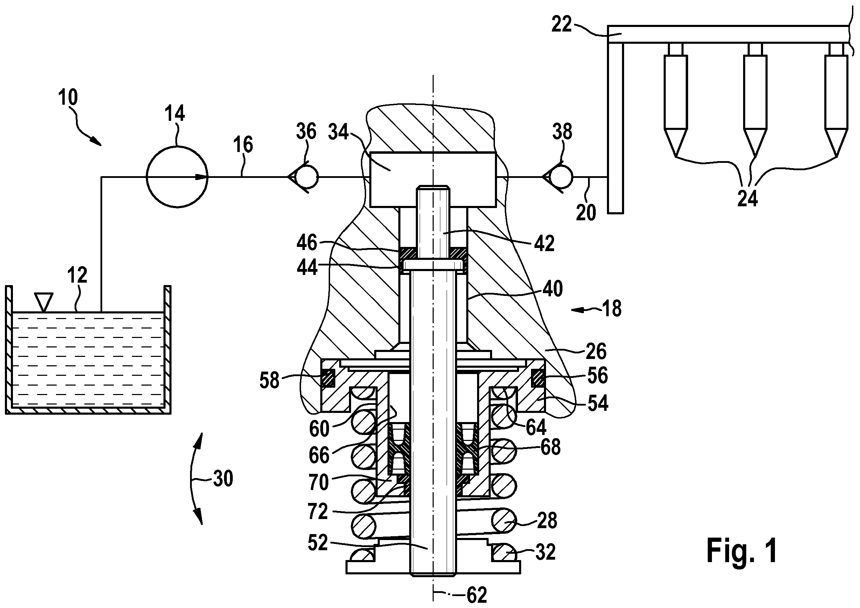

Ein Kraftstoffsystem einer Brennkraftmaschine trägt in Figur 1 insgesamt das Bezugszeichen 10. Es umfasst einen Kraftstoffbehälter 12, aus dem eine elektrische Vorförderpumpe 14 den Kraftstoff in eine Niederdruckleitung 16 fördert. Diese führt zu einer Hochdruckpumpe in Form einer Kolben-Kraftstoffpumpe 18. Von dieser führt eine Hochdruckleitung 20 zu einem Kraftstoffrail 22. An dieses sind mehrere Injektoren 24 angeschlossen, die den Kraftstoff direkt in ihnen jeweils zugeordnete Brennräume (nicht dargestellt) einspritzen.

Die Kolben-Kraftstoffpumpe 18 umfasst ein nur bereichsweise angedeutetes Pumpengehäuse 26, in dem ein Pumpenkolben 28 verschiebbar geführt bzw. gelagert ist. Dieser kann von einem nicht dargestellten Nockenantrieb in eine Hin- und Herbewegung versetzt werden, was durch einen seitlich gezeichneten Doppelpfeil 30 angedeutet ist. Der Pumpenkolben wird von einer Schraubenfeder 32 in einen in Figur 1 unteren Totpunkt beaufschlagt. Der Pumpenkolben 28 und das Pumpengehäuse 26 begrenzen einen Förderraum 34. Dieser Förderraum 34 ist über ein Einlassventil 36 mit der Niederdruckleitung 16 verbindbar. Ferner ist der Förderraum 34 über ein Auslassventil 38 mit der Hochdruckleitung 20 verbindbar.

Sowohl das Einlassventil 36 als auch das Auslassventil 38 sind als Rückschlagventile ausgeführt. Nicht dargestellt, aber möglich ist dabei eine Ausführung des Einlassventils 36 als Mengensteuerventil. Bei einem solchen kann das Einlassventil 36 während eines Förderhubs des Pumpenkolbens 28 zwangsweise geöffnet werden, so dass der Kraftstoff nicht in das Kraftstoffrail 22, sondern zurück in die Niederdruckleitung 16 gefördert wird. Hierdurch kann die von der Kolben-Kraftstoffpumpe 18 in das Kraftstoffrail 22 geförderte Kraftstoffmenge eingestellt werden.

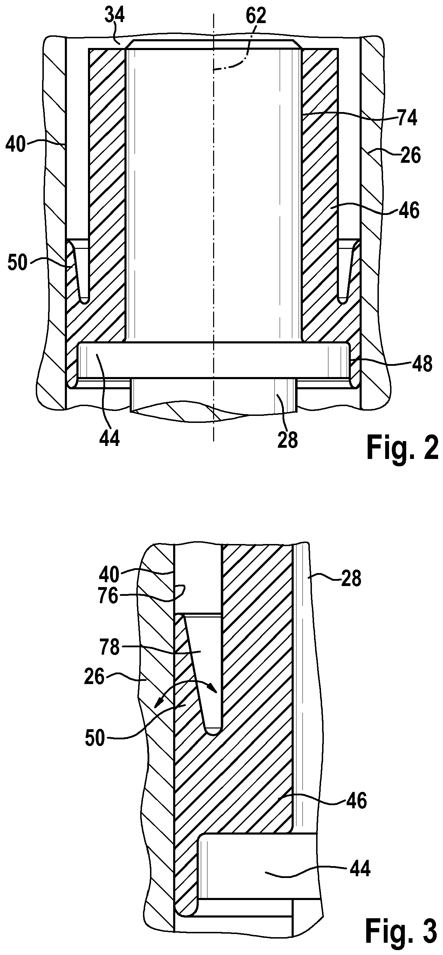

Der Pumpenkolben 28 ist in einem Pumpenzylinder 40 geführt, der insoweit Teil des Pumpengehäuses 26 ist. Der Pumpenkolben 28 weist an einem dem Förderraum 34 zugewandten Ende einen in Figur 1 oberen Endabschnitt 42 auf. In der Umgebung dieses oberen Endabschnitts 42 weist der Pumpenkolben 28 ferner einen kreisringartigen Absatz in der Art eines radial abstehenden umlaufenden Kragens 44 auf. Der Pumpenkolben 28 bzw. der Absatz 44 ist mit einer durch ein Kunststoffelement 46 gebildeten Lagerungs- und Dichtanordnung verklipst, wobei das Kunststoffelement 46 einen Führungsbereich 48 zur axialen Führung und/oder radialen Lagerung des Pumpenkolbens 28 im Pumpenzylinder 40 und einen als Dichtlippe ausgebildeten Abdichtbereich 50 aufweist. Der Absatz 44 und das Kunststoffelement mit Führungsbereich 48 und Abdichtbereich 50 sind in den Figuren 2 und 3 besser zu erkennen.

An seinem dem Förderraum 34 abgewandten Ende weist der Pumpenkolben 28 ferner einen in Figur 1 unteren Endabschnitt 52 auf. In der Umgebung dieses unteren Endabschnitts 52 ist eine Führungshülse 54 am Pumpengehäuse 26 fest angeordnet. Zwischen der Führungshülse 54 und dem Pumpengehäuse 26 ist eine O-Ring-Dichtung 56 in einer Nut 58 vorgesehen. Die Führungshülse 54 weist einen Zylinderabschnitt 60 auf, der sich koaxial zum Pumpenkolben28 erstreckt und durch welchen die Schraubenfeder 32 geführt ist. Die Schraubenfeder 32 taucht entlang einer Kolbenlängsachse 62 zumindest abschnittsweise in eine Federaufnahmenut 64 der Führungshülse 54 ein, wo sich sich gegen die Führungshülse 54 axial abstützt.

Die Führungshülse 54 weist ferner im Inneren einen kreiszylindrischen Aufnahmeabschnitt 66 auf, der im Wesentlichen durch die innere Umfangswand des Zylinderabschnitts 60 gebildet wird. In diesem Aufnahmeabschnitt 66 ist ein ringförmiges Dichtelement 68 relativ zum Pumpengehäuse 26 ortsfest angeordnet, wobei das Dichtelement 68 H-förmigen Querschnitt hat. In einem sich am abragenden Ende des Zylinderabschnitts nach radial einwärts erstreckenden Kragenabschnitt 70 ist ferner ein zweites Kunststoffelement 72 ebenfalls relativ zum Pumpengehäuse 26 ortsfest angeordnet. Dieses somit in axialer Richtung des Pumpenkolbens 28 gesehen vom ersten Kunststoffelement 46 deutlich beabstandete zweite Kunststoffelement 72 stellt zusammen mit dem Führungsbereich 48 des Kunststoffelements 46 die Führung bzw. Zweipunktlagerung des Pumpenkolbens 28 bereit.

Der Lagerpunkt des zweiten Kunststoffelements 72 befindet sich in der Nähe der Krafteinleitung durch die Schraubenfeder 32 bzw. durch den nicht dargestellten Nockenantrieb am in Figur 1 unteren Endabschnitt 52 des Pumpenkolbens 28. Somit kann eine Drehmomentbelastung der Lagerstellen reduziert werden. Durch die Trennung der Lagerung in den Führungsbereich 48 des Kunststoffelements 46 und in das Kunststoffelement 72 kann die Lagerung in der Nähe des oberen Endabschnitts 42 und des unteren Endabschnitts 52 des Pumpenkolbens 28 vorgesehen werden, womit der Einfluss von Querkräftten verringert werden kann. Durch eine daraus folgende geringere Lagerbelastung kann so die Verwendung der Kunststoffelemente 46, 72 ermöglicht werden.

Die Ausgestaltung des Kunststoffelements 46 ist vorliegend von besonderer Bedeutung. Auf dieses wird daher nunmehr unter Bezugnahme auf die Figuren 2 und 3 stärker im Detail eingegangen:
Figur 2 zeigt eine Schnittdarstellung eines Aussschnitts der Kolben-Kraftstoffpumpe 18, wobei das Kunststoffelement 46 deutlich zu erkennen ist. In einem in Figur 2 oberen Bereich weist das Kunststoffelement 46 einen Einschubabschnitt 74 in Form eines geraden Rohrabschnitts auf, der koaxial zum Pumpenkolben 28 ist und vom Pumpenkolben 28 durchdrungen wird bzw. auf diesen aufgeschoben ist. In einem in Figur 2 unteren Bereich ist das Kunststoffelement 46 über den Absatz 44 mit dem Pumpenkolben 28 verklipst. Insbesondere der radial außerhalb von der äußeren Mantelfläche des Absatzes 44 vorhandene Materialbereich des Kunststoffelements 46 bildet den bereits oben erwähnten Lager. bzw. Führungsbereich 48, durch den der Pumpenkolben 28 gleitend im Pumpenzylinder 40 geführt und radial gelagert ist.

Der Führungsbereich 48 weist von einer inneren Umfangswand 76 des Pumpenzylinders 40 einen in den Figuren nicht erkennbaren Abstand von etwa 3/100 mm auf. In axialer Richtung, das heißt entlang der Kolbenlängsachse 62, erstreckt sich zum Förderraum 34 hin im Anschluss an den Führungsbereich 48 der als Dichtlippe ausgebildete Abdichtbereich 50. Die Dichtlippe 50 erstreckt sich dabei als an den Führungsbereich 48 angeformter und nach radial außen elastisch vorgespannter Rohrabschnitt im Wesentlichen koaxial zum Pumpenkolben 28. Der Führungsbereich 48 und der Abdichtbereich 50 sind in Figur 2 und 3 einteilig ausgebildet.

Die Dichtlippe 50 liegt, wie in Figur 3 nochmals vergrößert zu erkennen ist, unter Vorspannung an der inneren Umfangswand 76 des Pumpenzylinders 40 an. Zwischen der Dichtlippe und dem Abdichtbereich 50 ist im Kunststoffelement 46 eine Ausnehmung vorhanden, welche einen Druckunterstützungsbereich 78 bildet. Dieser Druckunterstützungsbereich 78 ist derart ausgebildet, dass bei einer Bewegung des Pumpenkolbens 28 zum oberen Totpunkt, d.h. im Förderhub der Kraftstoff-Kolbenpumpe 18, der im Förderraum 34 herrschende Druck im Druckunterstützungsbereich 78 und so auch an der freien Außenseite der Dichtlippe wirkt, wodurch die Dichtlippe 50 zusätzlich zur Vorspannung hin zur Wand 76 dichtend beaufschlagt wird.

## Patentansprüche

1. Kolben-Kraftstoffpumpe (18) für eine Brennkraftmaschine mit einem Pumpenzylinder (40) und einem im Pumpenzylinder (40) verschiebbar aufgenommenen Pumpenkolben (28), **dadurch gekennzeichnet, dass** sie eine Lagerungs- und Dichtanordnung (46) für den Pumpenkolben (28) aufweist, welche einen Führungsbereich (48) zur axialen Führung des Pumpenkolbens (28) im Pumpenzylinder (40) und einen eine Dichtlippe aufweisenden Abdichtbereich (50) umfasst, **dadurch gekennzeichnet, dass** die Lagerungs- und Dichtanordnung (46) einteilig ausgebildet ist.

2. Kolben-Kraftstoffpumpe nach Anspruch 1, **dadurch gekennzeichnet, dass** sie ein Kunststoffelement (46) umfasst, an dem die Lagerungs- und Dichtanordnung ausgebildet ist.

3. Kolben-Kraftstoffpumpe (18) nach Anspruch 2, **dadurch gekennzeichnet, dass** das Kunststoffelement (46) aus Polyamid (PA) und/oder aus Polyetheretherketon (PEEK) hergestellt ist.

4. Kolben-Kraftstoffpumpe (18) nach einem der vorhergehenden Ansprüche, **dadurch gekennzeichnet, dass** die Lagerungs- und Dichtanordnung (46) mit dem Pumpenkolben (28) fest verbunden ist, vorzugsweise der Pumpenkolben (28) einen kreisringartigen Absatz (44) aufweist, mit dem die Lagerungs- und Dichtanordnung (46) verklipst und/oder verklebt ist.

5. Kolben-Kraftstoffpumpe (18) nach Anspruch 4, **dadurch gekennzeichnet, dass** der Absatz (44) in der Umgebung eines einem Förderraum (34) der Pumpe (18) zugewandten Endabschnitts (42) des Pumpenkolbens (28) angeordnet ist.

6. Kolben-Kraftstoffpumpe (18) nach einem der vorhergehenden Ansprüche, **dadurch gekennzeichnet, dass** zwischen Pumpenzylinder (40) und Führungsbereich (48) ein Spalt im Bereich von etwa 1/100 mm bis etwa 10/100 mm, vorzugsweise von etwa 3/100 mm vorhanden ist.

7. Kolben-Kraftstoffpumpe (18) nach einem der vorhergehenden Ansprüche, **dadurch gekennzeichnet, dass** in der Umgebung eines von einem Förderraum (34) der Pumpe (18) abgewandten Endabschnitts (52) des Pumpenkolbens (28) ein zweite Lagerungsanordnung, insbesondere ein zweites Kunststoffelement (72), zur Führung des Pumpenkolbens (28) vorzugsweise ortsfest relativ zum Pumpenzylinder (40) angeordnet ist.

## Claims

1. Piston-type fuel pump (18) for an internal combustion engine, having a pump cylinder (40) and having a pump piston (28) received in displaceable fashion in the pump cylinder (40), **characterized in that** said piston-type fuel pump has a mounting and sealing arrangement (46) for the pump piston (28), which mounting and sealing arrangement comprises a guide region (48) for the axial guidance of the pump piston (28) in the pump cylinder (40) and comprises a sealing region (50) which has a sealing lip, **characterized in that** the mounting and sealing arrangement (46) is of unipartite form.

2. Piston-type fuel pump according to Claim 1, **characterized in that** it comprises a plastics element (46) on which the mounting and sealing arrangement is formed.

3. Piston-type fuel pump (18) according to Claim 2, **characterized in that** the plastics element (46) is produced from polyamide (PA) and/or from polyether ether ketone (PEEK).

4. Piston-type fuel pump (18) according to one of the preceding claims, **characterized in that** the mounting and sealing arrangement (46) is fixedly connected to the pump piston (28), the pump piston (28) preferably having a circular ring-shaped shoulder (44) to which the mounting and sealing arrangement (46) is clipped and/or adhesively bonded.

5. Piston-type fuel pump (18) according to Claim 4, **characterized in that** the shoulder (44) is arranged in the vicinity of an end section (42), which faces toward a delivery chamber (34) of the pump (18), of the pump piston (28).

6. Piston-type fuel pump (18) according to one of the preceding claims, **characterized in that**, between the pump cylinder (40) and guide region (48), there is a gap in the range of approximately 1/100 mm to approximately 10/100 mm, preferably of approximately 3/100 mm.

7. Piston-type fuel pump (18) according to one of the preceding claims, **characterized in that** a second mounting arrangement, in particular a second plastics element (72), for the guidance of the pump piston (28) is arranged preferably positionally fixedly relative to the pump cylinder (40) in the vicinity of an end section (52), which faces away from a delivery chamber (34) of the pump (18), of the pump piston (28).

## Revendications

1. Pompe à carburant à piston (18) pour un moteur à combustion interne comprenant un cylindre de pompe (40) et un piston de pompe (28) reçu de manière déplaçable dans le cylindre de pompe (40), **caractérisée en ce qu'**elle présente un agencement de palier et d'étanchéité (46) pour le piston de pompe (28), qui comprend une région de guidage (48) pour le guidage axial du piston de pompe (28) dans le cylindre de pompe (40) et une région d'étanchéité (50) présentant une lèvre d'étanchéité, **caractérisée en ce que** l'agencement de palier et d'étanchéité (46) est réalisé d'une seule pièce.

2. Pompe à carburant à piston selon la revendication 1, **caractérisée en ce qu'**elle comprend un élément en plastique (46) au niveau duquel est réalisé l'agencement de palier et d'étanchéité.

3. Pompe à carburant à piston (18) selon la revendication 2, **caractérisée en ce que** l'élément en plastique (46) est fabriqué à partir de polyamide (PA) et/ou à partir de polyétheréthercétone (PEEK).

4. Pompe à carburant à piston (18) selon l'une quelconque des revendications précédentes, **caractérisée en ce que** l'agencement de palier et d'étanchéité (46) est connecté fixement au piston de pompe (28), de préférence le piston de pompe (28) présente un épaulement de type annulaire circulaire (44) avec lequel l'agencement de palier d'étanchéité (46) est encliqueté et/ou collé.

5. Pompe à carburant à piston (18) selon la revendication 4, **caractérisée en ce que** l'épaulement (44) est disposé dans l'environnement d'une portion d'extrémité (42) du piston de pompe (28) tournée vers un espace de refoulement (34) de la pompe (18).

6. Pompe à carburant à piston (18) selon l'une quelconque des revendications précédentes, **caractérisée en ce qu'**entre le cylindre de pompe (40) et la région de guidage (48) est prévu un espace d'approximativement 1/100 mm à approximativement 10/100 mm, de préférence d'environ 3/100 mm.

7. Pompe à carburant à piston (18) selon l'une quelconque des revendications précédentes, **caractérisée en ce que** dans l'environnement d'une portion d'extrémité (52) du piston de pompe (28) opposée à l'espace de refoulement (34) de la pompe (18) est disposé un deuxième agencement de palier, en particulier un deuxième élément en plastique (72), pour guider le piston de pompe (28) de préférence de manière fixe par rapport au cylindre de pompe (40).
